# FASCICULE DE BREVET EUROPEEN

(11) **EP 0 416 994 B1**
(45) Date de publication et mention de la délivrance du brevet: **14.12.1994**
(21) Numéro de dépôt: 90402434.6
(22) Date de dépôt: 04.09.1990
(51) Int. Cl.: G11B 5/21, G11B 5/31

(54) **Procédé de réalisation d'une tête magnétique à axe de facile aimantation convenablement orienté et tête obtenue par ce procédé**
Herstellungsverfahren eines Magnetkopfes mit passend orientierter Achse mit leichter Magnetisierung und nach diesem Verfahren hergestellter Kopf
Method of manufacturing a magnetic head having a simple axis of magnetization suitably oriented and head produced by that method

(30) Priorité: 06.09.1989 FR 8911643
(43) Date de publication de la demande: 13.03.1991
(73) Titulaire: COMMISSARIAT A L'ENERGIE ATOMIQUE, 75015 Paris Cédex 15 (FR)
(72) Inventeur: Fedeli, Jean-Marc, F-38140 Beaucroissant (FR); Moriceau, Hubert, F-38120 Saint Egreve (FR); Muffato, Viviane, F-38450 Vif (FR); Vaudaine, Marie-Hélène, F-38180 Seyssins (FR)
(74) Mandataire: Signore, Robert

(56) Documents cités:
- EP-A- 0 152 064
- US-A- 4 399 479
- IBM TECHNICAL DISCLOSURE BULLETIN. vol. 17, no. 11, avril 1975, ARMONK,N.Y.,USApages 3446 - 3449; L.T. ROMANKIW et al.: "BATCH FABRICATION OF KEYHOLE TYPE
- MAGNETIC RECORDING HEADS"
- PATENT ABSTRACTS OF JAPAN vol. 8, no. 183 (P-296)(1620) 23 août 1984,& JP-A-59 072636 (NIPPON DENKI K.K.) 24 avril 1984,
- PATENT ABSTRACTS OF JAPAN vol. 8, no. 165 (P-291)(1602) 31 juillet 1984,& JP-A-59 060723 (FUJITSU K.K.) 06 avril 1984,
- PATENT ABSTRACTS OF JAPAN vol. 13, no. 314 (P-899)(3662) 18 juillet 1989,& JP-A-01 84406 (SONY CORP.) 29 mars 1989,
- PATENT ABSTRACTS OF JAPAN vol. 11, no. 342 (P-635)(2789) 10 novembre 1987,& JP-A-62 124620 (YOKOGAWA ELECTRIC CORP) 05 juin 1987,

## Description

La présente invention a pour objet un procédé de réalisation d'une tête magnétique à axe de facile aimantation convenablement orienté et une tête obtenue par ce procédé. L'invention trouve une application dans l'enregistrement magnétique. La tête obtenue par le procédé de l'invention peut être soit à écriture et à lecture, soit à lecture ou écriture seule.

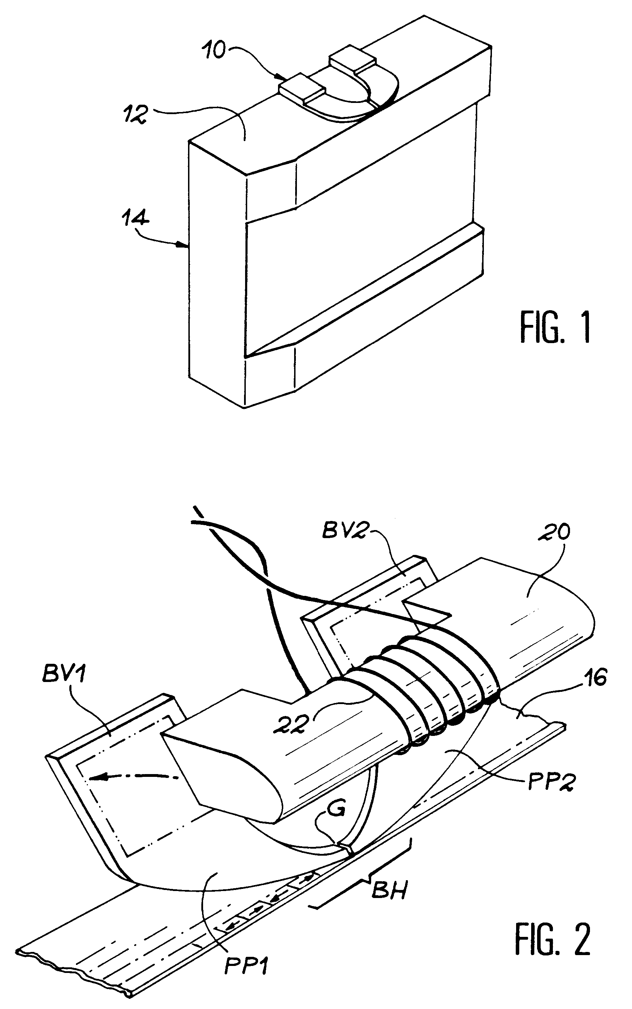

Les figures 1 et 2 montrent un mode de réalisation de têtes magnétiques d'écriture et de lecture pour des pistes d'enregistrement étroites. La tête magnétique 10 est disposée sur la face latérale 12 d'un support 14 présentant une forme générale de catamaran. Le support d'enregistrement porte la référence 16. Sa largeur est de l'ordre de 2 µm.

La tête comprend essentiellement un circuit magnétique comprenant une première partie constituée de deux pièces polaires PP1, PP2 (par exemple en FeNi) de faible épaisseur (par exemple 2 µm), séparées par un entrefer G très étroit (par exemple 0,3 µm). Ces pièces polaires forment un motif en U avec deux branches "verticales" BV1, BV2 (c'est-à-dire de direction générale perpendiculaire au plan du support d'enregistrement), ces branches étant relativement larges (quelques dixièmes de millimètres) et une branche "horizontale" BH (c'est-à-dire parallèle au support d'enregistrement) beaucoup plus étroite (environ un dixième de millimètre).

La tête magnétique comprend une seconde partie, destiné à permettre au flux magnétique de se refermer. Sur la figure 2, cette seconde partie présente la forme d'un barreau de ferrite 20 collé à ses deux extrémités sur les pièces polaires. Ce barreau est entouré d'un bobinage conducteur 22, par exemple en cuivre de diamètre 15 µm.

Une telle tête est capable d'écrire et de lire des informations magnétiques sur le support 16.

Il existe de nombreux autres types de têtes, par exemple avec un bobinage en couches minces déposées selon les techniques de la microélectronique comme décrit dans FR-A-2 604 021, ou encore des têtes de lecture seulement avec des éléments magnétosensibles insérés dans le circuit magnétique, comme décrit par exemple dans FR-A-2 612 676 ou EP-A-0 269 129.

Comme l'invention porte essentiellement sur la réalisation de la première partie du circuit magnétique, à savoir la partie en forme de U avec deux pièces polaires et un entrefer, il n'est pas nécessaire de décrire toutes ces variantes, celle des figures 1 et 2 suffisant à comprendre le problème résolu par l'invention.

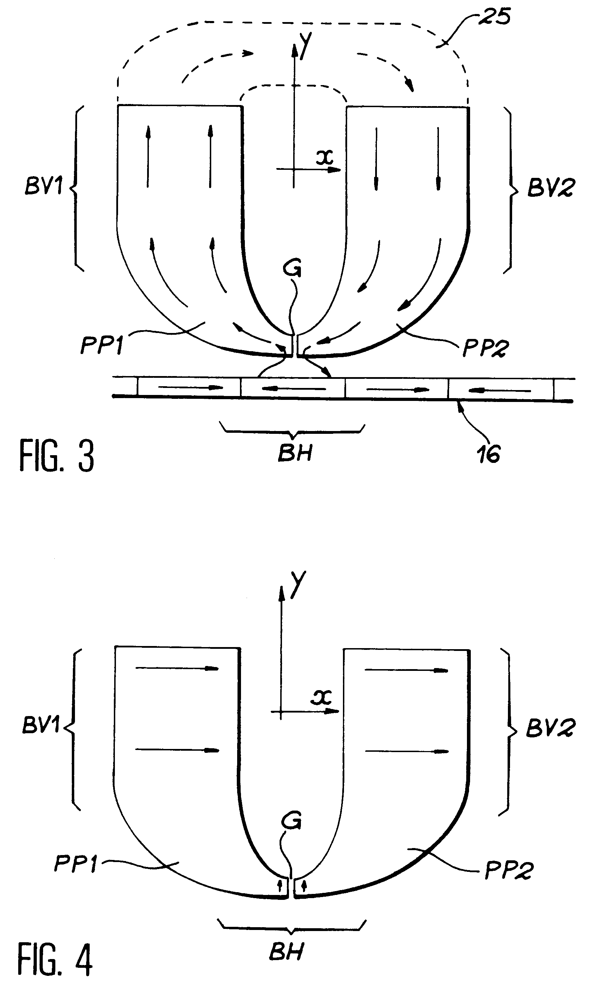

La figure 3 rappelle l'essentiel des fonctions remplies par une telle tête.

La tête est placée devant une piste 16 présentant une aimantation pouvant prendre l'une ou l'autre de deux directions. L'induction magnétique dans les pièces polaires PP1 et PP2 est représentée par des flèches ; cette induction se referme par une pièce arrière 25 non explicitée. L'induction est sensiblement horizontale dans la branche horizontale étroite BH (c'est-à-dire parallèle à un axe x) et sensiblement verticale dans les deux branches verticales larges BV1, BV2 (c'est-à-dire parallèle à un axe y).

Pour diminuer le bruit dans le signal électrique de lecture et obtenir une bonne efficacité de la tête, l'axe de facile aimantation de la couche magnétique formant les pièces polaires (aimantation qui est celle que l'on obtient en l'absence de tout champ extérieur) doit être perpendiculaire à l'induction obtenue en présence d'un support d'enregistrement, et ceci afin de profiter au mieux du phénomène de rotation cohérente de l'aimantation dans la couche magnétique.

Au repos, c'est-à-dire loin de tout support d'enregistrement, l'aimantation devrait donc avoir idéalement l'allure représentée sur la figure 4, avec une direction générale verticale (parallèle à y) dans la branche horizontale étroite BH et autour de l'entrefer et une direction générale horizontale (parallèle à x) dans les deux branches verticales larges BV1, BV2.

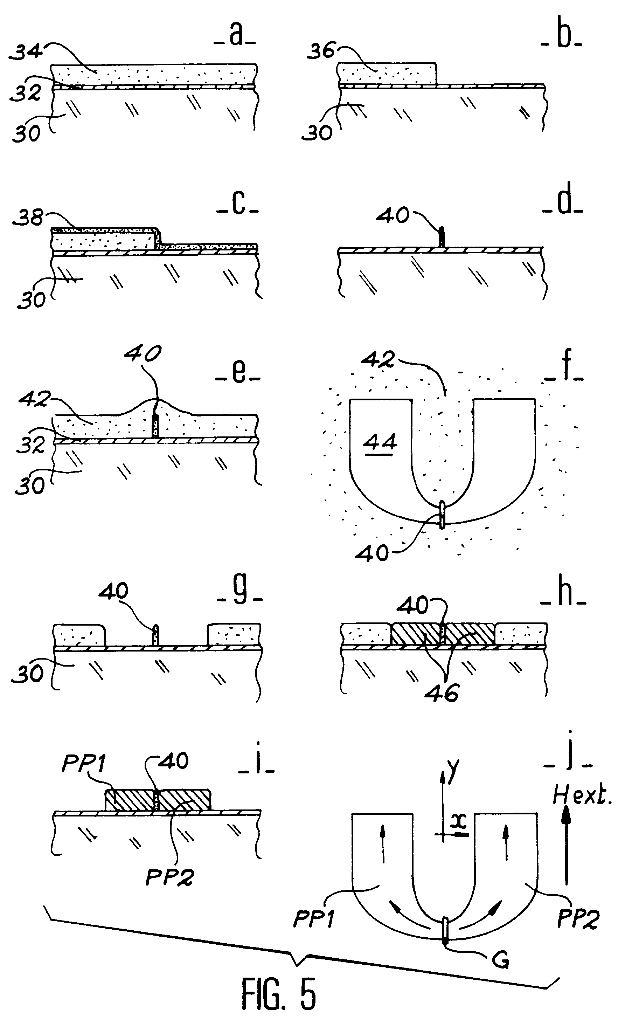

Lorsqu'on utilise sans précaution particulière les procédés connus de réalisation de telles têtes, et par exemple les procédés mettant en oeuvre des dépôts électrolytiques comme décrits dans US-A-4,402,801 ou dans EP-A-0 262 028, on est loin d'obtenir cette situation idéale. On peut même obtenir la situation opposée comme le montre la figure 5 qui illustre quelques étapes de la fabrication d'une telle tête.

Les opérations entreprises de manière connue sont les suivantes :
- sur un substrat 30 non conducteur, on dépose une couche métallique 32 et, sur l'ensemble, une résine 34 (a) ; (si le substrat est conducteur ou semi-conducteur on peut se passer de la couche métallique) ;
- on insole cette résine et on la développe pour obtenir une marche 36 (b) ;
- on dépose sur l'ensemble une couche de matériau amagnétique 38, par exemple en silice (c) ;
- par gravure ionique réactive, on enlève les parties horizontales des couches 36 et 38 pour ne laisser subsister qu'un mur amagnétique 40 (d) ;
- on recouvre l'ensemble de résine 42 (e) ;
- on grave dans la résine une tranchée 44 ayant la forme du motif en U devant constituer les futures pièces polaires (f en vue de dessus, g en coupe à travers le mur 40) ;
- on forme un dépôt électrolytique 46 dans la tranchée, par exemple en FeNi en présence d'un champ extérieur Hext (h) ;
- on fait disparaître le reste de résine et l'on obtient le circuit en U avec ses deux pièces polaires PP1 et PP2, l'espaceur amagnétique 40 dans l'entrefer G (i, j).

Pour tenter d'obtenir un axe de facile aimantation parallèle à l'entrefer, Hext est dirigé parallèlement au mur 40 ; si l'axe de facile aimantation est bien parallèle à Hext dans les branches verticales du U, en revanche, dans la branche horizontale étroite, en raison d'un effet de bord très marqué créant une anisotropie, l'axe de facile aimantation bascule et se couche parallèlement aux bords horizontaux.

Le résultat obtenu (j) est ainsi l'opposé du résultat recherché (Fig. 4).

Si l'on basculait le champ extérieur Hext de 90°, on obtiendrait bien l'orientation recherchée dans les branches larges, mais l'orientation serait a fortiori mauvaise au voisinage de l'entrefer. Or, c'est dans cette zone étroite que les phénomènes magnétiques sont les plus intenses et requièrent une orientation convenable de l'axe de facile aimantation.

La présente invention a justement pour but de remédier à cet inconvénient. A cette fin, elle propose un procédé qui permet d'obtenir, dans la branche horizontale étroite et de part et d'autre de l'entrefer, une orientation de l'axe de facile aimantation parallèle à l'entrefer (autrement dit parallèle à l'espaceur ou à l'axe y).

Dans une variante avantageuse, l'invention prévoit en outre l'obtention d'une orientation de l'axe de facile aimantation dans les deux branches verticales larges perpendiculaire à la direction précédente (c'est-à-dire perpendiculaire à l'entrefer, ou à l'espaceur, ou à l'axe y).

Ce but est atteint grâce à la formation d'un motif magnétique de grandes dimensions, qui évite les phénomènes d'effets de bord, ce motif étant ensuite mis aux dimensions requises une fois l'aimantation convenablement orientée.

De façon plus précise, l'invention a pour objet un procédé comprenant essentiellement les opérations suivantes :
- on forme d'abord un espaceur amagnétique sur le substrat, l'espaceur ayant une épaisseur égale à celle du futur entrefer et une certaine direction générale,
- on dépose ensuite autour de l'espaceur une couche magnétique pour constituer un motif ayant, dans la zone de l'espaceur, des dimensions beaucoup plus grandes que celles de la future branche horizontale étroite, et, pendant cette opération, on applique un champ magnétique de direction parallèle à celle de l'espaceur, la couche magnétique ainsi obtenue présentant dans l'ensemble du motif un axe de facile aimantation parallèle à l'espaceur,
- on élimine la partie superflue de cette couche dans la zone de l'espaceur pour ne garder que la branche horizontale étroite désirée, cette branche présentant alors un axe de facile aimantation parallèle à l'espaceur.

L'invention prévoit deux variantes de ce procédé :
- dans la première, on forme un motif magnétique sensiblement rectangulaire autour de l'espaceur et l'on grave ensuite ce motif pour ne laisser subsister que le circuit en U désiré avec sa branche horizontale étroite et ses deux branches verticales larges ; l'ensemble obtenu est alors découpé puis poli de façon classique,
- dans la seconde, on forme un motif avec deux branches verticales ayant déjà la forme finale et une branche horizontale beaucoup plus large que la branche horizontale finale désirée, on découpe ensuite l'ensemble et on le polit perpendiculairement à l'espaceur pour supprimer la partie inférieure superflue de la branche horizontale et donner à celle-ci sa largeur définitive.

Pour obtenir les deux orientations idéales requises à la fois dans la branche horizontale et dans les deux branches verticales, on peut poursuivre le procédé en déposant, sur les branches verticales, une couche magnétique supplémentaire en présence d'un champ magnétique de direction perpendiculaire à celle de l'espaceur, pour obtenir deux surépaisseurs ayant un axe de facile aimantation perpendiculaire à la direction de l'espaceur.

Dans tous ces modes de mise en oeuvre, le dépôt de la ou des couche(s) magnétique(s) peut s'effectuer par la technique du dépôt électrolytique. Mais toute autre technique connue comme la pulvérisation cathodique peut être utilisée.

La présente invention a également pour objet une tête magnétique obtenue par le procédé qui vient d'être défini. Elle est caractérisée par le fait que, dans la branche horizontale étroite du U, l'axe de facile aimantation est parallèle à l'espaceur.

Dans une variante avantageuse, les deux branches verticales larges présentent chacune une surépaisseur avec un axe de facile aimantation perpendiculaire à l'espaceur.

De toute façon, les caractéristiques et avantages de l'invention apparaîtront mieux à la lumière de la description qui va suivre. Cette description porte sur des exemples de réalisation donnés à titre explicatif et nullement limitatif et se réfère à des dessins annexés, sur lesquels :
- la figure 1, déjà décrite, montre une tête magnétique montée sur un patin de type catamaran ;
- la figure 2, déjà décrite, montre la mise en place d'un barreau de ferrite avec bobinage ;
- la figure 3, déjà décrite, illustre les lignes de champ magnétique dans les pièces polaires ;
- la figure 4, déjà décrite, montre l'orientation idéale que devrait avoir l'axe de facile aimantation ;
- la figure 5, déjà décrite, montre diverses étapes d'un procédé de réalisation d'une tête selon l'art antérieur ;
- la figure 6 montre les principales étapes d'un procédé conforme à l'invention ;
- la figure 7 illustre une variante du procédé de l'invention ;
- la figure 8 montre diverses étapes de réalisation d'un mode de mise en oeuvre perfectionné du procédé de l'invention.

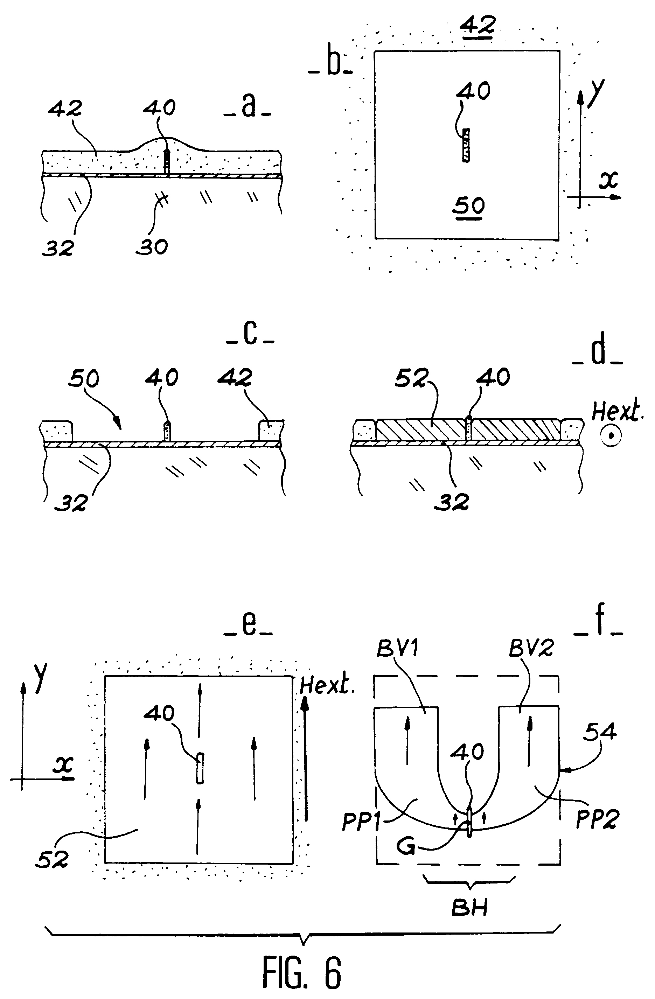

Le procédé de l'invention reprend les premières opérations du procédé décrit en liaison avec la figure 5, et plus précisément les opérations conduisant aux étapes illustrées sur les figures a à e (inclus). La figure 6 montre la suite des opérations à effectuer à partir du composant illustré sur la partie a. Ce composant comprend un substrat 30, une couche métallique 32, un espaceur amagnétique 40 et une couche de résine 42 (la figure 6a est donc identique à la figure 5e). Selon l'invention, le procédé se poursuit par les opérations suivantes :
- on masque la résine pour définir un motif sensiblement rectangulaire entourant l'espaceur, on insole et on enlève la résine pour créer une tranchée 50 (b en vue de dessus, c en coupe) ;
- on forme une couche magnétique 52 par exemple par dépôt électrolytique en prenant la couche métallique 32 comme électrode, en appliquant un champ extérieur Hext parallèle à l'axe y, c'est-à-dire parallèle à l'espaceur (d, e), l'axe de facile aimantation est alors, dans la totalité du motif magnétique, parallèle à Hext (cest-à-dire à l'axe y), les grandes dimensions du motif rectangulaire évitant l'apparition d'effets de bord ;
- on enlève la résine restante et l'on grave le motif magnétique par tout procédé de gravure classique pour lui donner la forme en U avec ses deux pièces polaires PP1, PP2 séparées par un entrefer G comblé par l'espaceur 40. (f) ; l'axe de facile aimantation conserve son orientation lors de cette gravure et se trouve donc finalement orienté convenablement, c'est-à-dire parallèlement à l'entrefer (ou à l'espaceur).

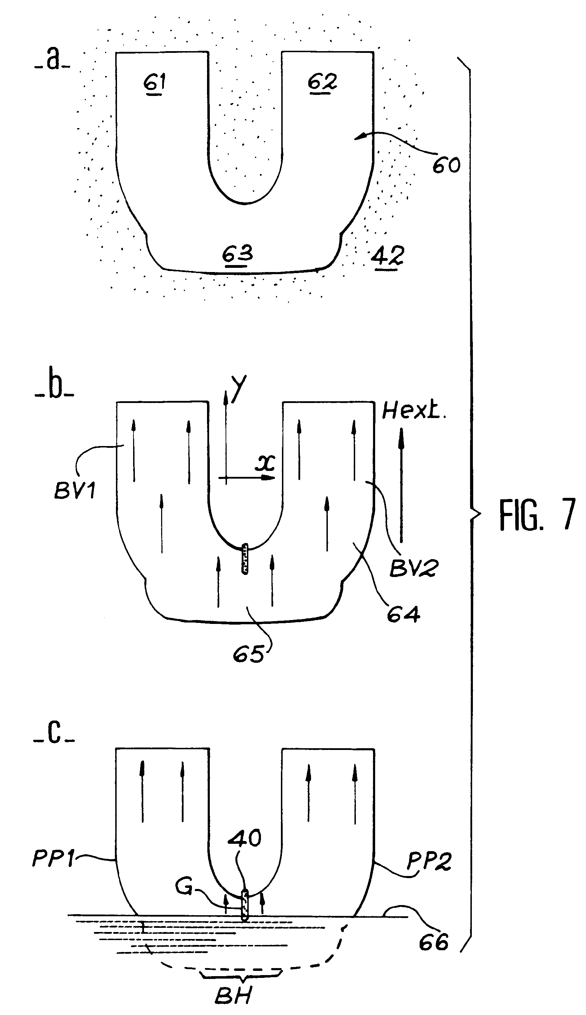

Dans une seconde variante de mise en oeuvre de l'invention, le motif magnétique formé comprend déjà ses deux branches verticales en U. Pour cela :
- on creuse une tranchée 60 dans la résine 42 conformément à la figure 7 (a) avec les branches verticales 61, 62 déjà formées et une partie horizontale 63 beaucoup plus large que la future branche horizontale BH ;
- on forme, dans cette tranchée, une couche magnétique 64 par exemple par dépôt électrolytique en présence d'un champ magnétique Hext dirigé selon l'axe y (b) ; on découpe ensuite la pièce obtenue puis on la polit pour supprimer la partie inférieure 65 jusqu'à obtenir la largeur voulue pour la partie horizontale 66 (c) ; dans ces opérations de découpe et de polissage, l'axe de facile aimantation reste parallèle à sa direction imposée par Hext, c'est-à-dire parallèle à l'espaceur 40.

Si le procédé qui vient d'être décrit résout le problème de l'obtention d'un axe de facile aimantation parallèle à l'entrefer au voisinage de celui-ci, ce qui est essentiel, il reste que la tête n'est pas parfaite puisque, dans les branches verticales du U, l'axe de facile aimantation n'a pas l'orientation espérée (cf Fig. 4).

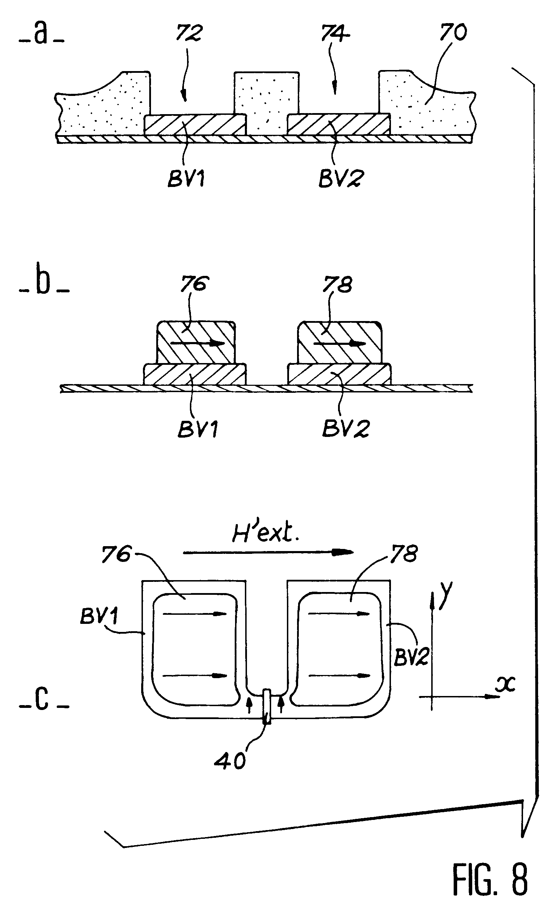

Bien que secondaire, ce problème peut encore être résolu par l'invention, par la poursuite du procédé par des opérations illustrées sur la figure 8.

Le composant obtenu comme décrit précédemment (par l'une quelconque des variantes des figures 6 ou 7) est recouvert de résine 70, laquelle est insolée à travers un masque, puis développée et éliminée pour laisser deux tranchées 72, 74 au-dessus des branches verticales BV1, BV2 des pièces polaires déjà réalisées (a).

Dans ces deux tranchées, on forme,par exemple par croissance électrolytique, une couche magnétique en présence d'un champ magnétique extérieur H'ext parallèle à l'axe x (b) et on élimine la résine. On obtient alors deux surépaisseurs 76, 78 (b et c) dans lesquelles l'axe de facile aimantation est parallèle à l'axe x et perpendiculaire au flux qui passe alors de façon préférentielle dans ces surépaisseurs. Ces zones diminuent par ailleurs la réluctance du circuit magnétique, ce qui améliore l'efficacité de la tête, sans nuire à la minceur des pièces polaires dans la région de l'entrefer.

La tête obtenue (Fig. 8, partie c) présente alors une double orientation de l'axe de facile aimantation : parallèle à l'axe y près de l'entrefer et parallèle à l'axe x dans les branches larges. C'est la tête idéale recherchée.

## Revendications

1. Procédé de réalisation d'une tête magnétique d'écriture et/ou de lecture dans lequel on forme sur un substrat (30) un circuit magnétique comprenant une première partie constituée de deux pièces polaires (PP1, PP2) formant un U avec deux branches verticales larges (BV1, BV2) et une branche horizontale étroite (BH) interrompue par un entrefer (G) et une seconde partie (25) de fermeture du flux magnétique reliant les deux branches verticales du U, le circuit magnétique étant équipé de moyens (20, 22) de détection et/ou de création d'une variation du flux, le procédé comprenant les étapes suivantes pour réaliser la partie en U :
- on forme d'abord un espaceur amagnétique (40) sur le substrat, l'espaceur (40) ayant une épaisseur égale à celle du futur entrefer (G) et une certaine direction générale (y),
- on dépose ensuite autour de l'espaceur (40) une couche magnétique (52) pour constituer un motif ayant, dans la zone de l'espaceur, des dimensions beaucoup plus grandes que celles de la future branche horizontale étroite (BH), et, pendant cette opération, on applique un champ magnétique (Hext) de direction (y) parallèle à celle de l'espaceur, la couche magnétique (52) ainsi obtenue présentant dans l'ensemble du motif un axe de facile aimantation parallèle à cette direction et à l'espaceur (40),
- on élimine la partie superflue de cette couche (52) dans la zone de l'espaceur pour ne garder que la branche horizontale étroite désirée (BH), cette branche présentant alors un axe de facile aimantation parallèle à l'espaceur (40).

2. Procédé selon la revendication 1, caractérisé par le fait que l'on forme un motif magnétique sensiblement rectangulaire (50) autour de l'espaceur (40) et l'on grave ensuite ce motif pour ne laisser subsister que le circuit en U désiré avec sa branche horizontale étroite (BH) et ses deux branches verticales larges (BV1, BV2).

3. Procédé selon la revendication 1, caractérisé par le fait que l'on forme un motif (61, 62) avec deux branches verticales (BV1, BV2) ayant déjà la forme finale du U et une branche horizontale (63) beaucoup plus large que la branche horizontale finale désirée (BH), on découpe ensuite l'ensemble et on le polit perpendiculairement à l'espaceur pour supprimer la partie inférieure superflue de la branche horizontale (63) et donner à celle-ci sa largeur définitive (BH).

4. Procédé selon l'une quelconque des revendications 2 et 3, caractérisé par le fait qu'après avoir réalisé le circuit magnétique en forme de U, on dépose, sur une partie des branches verticales, (BV1, BV2), une couche magnétique supplémentaire en présence d'un champ magnétique (H'ext) de direction (x) perpendiculaire à celle de l'espaceur (40) pour obtenir deux surépaisseurs (76, 78) avec un axe de facile aimantation perpendiculaire à la direction de l'espaceur (40).

5. Procédé selon l'une quelconque des revendications 1 à 4, caractérisé par le fait qu'on forme les couches magnétiques (52, 76, 78) par croissance électrolytique d'un matériau magnétique.

6. Tête magnétique d'écriture et/ou de lecture obtenue par le procédé de la revendication 1, cette tête comprenant un circuit magnétique comprenant une première partie en forme de U avec deux branches verticales larges (BV1, BV2) et une branche horizontale étroite (BH) interrompue par un entrefer (G) comblé par un espaceur amagnétique (40) et une seconde partie (25) de fermeture du flux reliant les deux branches verticales du U, ce circuit étant équipé de moyens (20, 22) de détection et/ou de création d'une variation de flux magnétique, cette tête étant caractérisée par le fait que la couche magnétique présente, dans la branche horizontale étroite (BH), un axe de facile aimantation parallèle à l'espaceur (40).

7. Tête magnétique d'écriture et/ou de lecture selon la revendication 6, caractérisé par le fait qu'en outre les deux branches verticales larges (BV1, BV2) présentent chacune une surépaisseur (76, 78) avec un axe de facile aimantation perpendiculaire à l'espaceur.

## Claims

1. Process for producing a magnetic reading and/or writing head, in which is formed on a substrate (30) a magnetic circuit having a first part constituted by two pole pieces (PP1,PP2) forming a U with two wide vertical branches (BV1,BV2) and a narrow horizontal branch (BH) interrupted by an air gap (G) and a second magnetic flux closure part (25) connecting the two vertical branches of the U, said magnetic circuit being equipped with means (20,22) for the detection and/or creation of a variation of the flux, said process comprising the following stages for obtaining the U-shaped part:
firstly an amagnetic spacer (40) is formed on the substrate, said spacer (40) having a thickness equal to that of the future gap (G) and a certain general direction (y),
around the spacer (40) is then deposited a magnetic layer (52) in order to constitute a pattern having, in the zone of the spacer, much larger dimensions than those of the future narrow horizontal branch (BH) and, during this operation, a magnetic field (Hext) with a direction (y) parallel to that of the spacer is applied, the thus obtained magnetic layer (52) having in the pattern an easy axis of magnetization parallel to the spacer (40),
the superfluous part of said layer (52) is eliminated in the zone of the spacer in order to only retain the desired narrow horizontal branch (BH), which then has an easy axis of magnetization parallel to the spacer (40).

2. Process according to claim 1, characterized in that a substantially rectangular magnetic pattern (50) is formed around the spacer (40) and this pattern is then etched so as to only leave the desired U-shaped circuit with its narrow horizontal branch (BH) and its two wide vertical branches (BV1, BV2).

3. Process according to claim 1, characterized in that a pattern (61, 62) is formed with two vertical branches (BV1, BV2) already having the final shape of the U and horizontal branch (63) much wider than the desired final horizontal (BH), the assembly is then cut and polished perpendicular to the spacer in order to eliminate the superfluous lower part of the horizontal branch (63) and give it its final width (BH).

4. Process according to either of the claims 2 and 3, characterized in that after producing the U-shaped magnetic circuit on part of the vertical branches (BV1, BV2) is deposited a supplementary magnetic layer in the presence of a magnetic field (H'ext) with a direction (x) perpendicular to that of the spacer (40) in order to obtain two extra thicknesses (76, 68) with an easy magnetization axis perpendicular to the direction of the spacer (40).

5. Process according to any one of the claims 1 to 4, characterized in that the magnetic layers (52, 76, 68) are formed by the electrolytic growth of a magnetic material.

6. Reading and/or writing head obtained by the process of claim 1, said head incorporating a magnetic circuit having a first U-shaped part with two wide vertical branches (BV1, BV2) and one narrow horizontal branch (BH) interrupted by a gap (G) filled with an amagnetic spacer (40) and a second flux closing part (25) linking the two vertical branches of the U, said circuit being equipped with means (20, 22) for the detection and/or creation of a magnetic flux variation, said head being characterized in that the magnetic layer has, in the narrow horizontal branch (BH), an easy magnetization axis parallel to the spacer (40).

7. Reading and/or writing magnetic head according to claim 6, characterized in that the two wide vertical branches (BV1, BV2) have in each case an extra thickness (76, 78) with an easy magnetization axis perpendicular to the spacer.

## Patentansprüche

1. Verfahren zur Herstellung eines magnetischen Schreib- und/oder Lesekopfs, bei dem man auf einem Substrat (30) einen Magnetkreis bildet, der einen ersten Teil, der von zwei Polstücken (PP1, PP2), die ein U mit zwei vertikalen, langen Schenkeln (BV1, BV2) und einem horizontalen, schmalen Abschnitt (BH) gebildet ist, der von einem Spalt (G) unterbrochen ist, und einen zweiten Teil (25) zum Schileßen des Magnetflusses umfaßt, der die zwei vertikalen Schenkel des U verbindet, wobei der Magnetkreis mit einer Einrichtung (20, 22) zum Erfassen und/oder Erzeugen einer Flußänderung ausgerüstet ist, und das Verfahren die folgenden Schritte umfaßt, um den U-Teil herzustellen:
man bildet zuerst ein nichtmagnetisches Abstandsteil (40) auf dem Substrat, wobei das Abstandsteil (40) eine Dicke gleich derjenigen des zukünftigen Spalts (G) und eine gewisse, allgemeine Richtung (y) hat,
man bringt dann um das Abstandsstück (40) herum eine magnetische Schicht (52) auf, um ein Muster zu bilden, das in dem Bereich des Abstandsstücks viel größere Abmessungen als diejenigen des zukünftigen, horizontalen, schmalen Abschnitts (EH) hat, und man legt während dieses Vorgangs ein Magnetfeld (Hext) in paralleler Richtung (y) zu der des Abstandsstücks an, wobei die derart erhaltene magnetische Schicht (52) in der Gesamtheit des Musters eine Achse leichter Magnetisierung parallel zu dieser Richtung und zu dem Abstandsstück (40) darstellt,
man entfernt den überflüssigen Teil dieser Schicht (52) in dem Bereich des Abstandsstücks, um nur den horizontalen, schmalen, erwünschten Abschnitt (BH) zu bewahren, wobei dieser Abschnitt dann eine Achse leichter Magnetisierung parallel zu dem Abstandsstück (40) darstellt.

2. Verfahren gemäß Anspruch 1, **dadurch gekennzeichnet**, daß man ein im wesentlichen rechteckförmiges, magnetisches Muster (50) um das Abstandsstück (40) herum bildet und man dann dieses Muster ätzt, um nur den erwünschten Kreis in U-Form mit seinem horizontalen, schmalen Abschnitt (BH) und seinen zwei vertikalen, breiten Schenkeln (BV1, BV2) übrig zu lassen.

3. Verfahren gemäß Anspruch 1, **dadurch gekennzeichnet**, daß man ein Muster (61, 62) mit zwei vertikalen Schenkeln (BV1, BV2), die bereits die endgültige Form des U haben, und einem horizontalen Abschnitt (63) bildet, der viel breiter als der erwünschte, horizontale, entgültige Abschnitt (BH) ist, man dann die Gesamtheit durchschneidet und sie senkrecht zu dem Abstandsstück schleift, um den unteren, überflüssigen Teil des horizontalen Abschnitts (63) zu unterdriicken und diesem seine endgültige Breite (BH) zu geben.

4. Verfahren gemäß einem der Ansprüche 2 oder 3, dadurch gekennzeichnet, daß man, nachdem der Magnetkreis in U-Form hergestellt worden ist, auf einem Abschnitt der vertikalen Schenkel (BV1, BV2) eine zusätzliche, magnetische Schicht in Gegenwart eines Magnetfelds (H'ext) in Richtung (x) senkrecht zu derjenigen des Abstandsstücks (40) aufbringt, um zwei Überdicken (76, 78) mit einer Achse der leichten Magnetisierung senkrecht zu der Richtung des Abstandsstücks (40) zu erhalten.

5. Verfahren gemäß irgendeinem der Ansprüche 1 bis 4, **dadurch gekennzeichnet**, daß man Magnetschichten (52, 76, 78) durch elektrolytisches Wachsen eines magnetischen Materials bildet.

6. Magnetischer Schreib- und/oder Lesekopf, der durch das Verfahren nach Anspruch 1 erhalten wird, wobei dieser Kopf einen Magnetkreis umfaßt, der einen ersten Teil in U-Form mit zwei vertikalen, breiten Schenkeln (BV1, BV2) und einem horizontalen, schmalen Abschnitt (BH) umfaßt, der von einem Spalt (G) unterbrochen ist, der von einem nichtmagnetischen Abstandsstück (40) gefüllt ist, und einen zweiten Teil (25) zum Schließen des Flusses aufweist, der die zwei vertikalen U-Schenkel verbindet, wobei dieser Kreis mit einer Einrichtung (20, 22) zum Erfassen und/oder zum Erzeugen einer magnetischen Flußänderung ausgerüstet ist, und dieser Kopf **dadurch gekennzeichnet** ist, daß die vorhandene, magnetische Schicht in dem horizontalen, schmalen Abschnitt (BH) eine Achse leichter Magnetisierung parallel zu dem Abstandsstück (40) aufweist.

7. Magnetischer Schreib- und/oder Lesekopf gemäß Anspruch 6, dadurch gekennzeichnet, daß ferner jeder der zwei vertikalen, breiten Schenkel (BV1, BV2) eine Überdicke (76, 78) mit einer Achse leichter Magnetisierung senkrecht zu dem Abstandsstück aufweist.
